# FASCICULE DE BREVET EUROPEEN

(11) **EP 0 589 775 B1**
(45) Date de publication et mention de la délivrance du brevet: **27.12.1996**
(21) Numéro de dépôt: 93402300.3
(22) Date de dépôt: 21.09.1993
(51) Int. Cl.: H02G 5/00

(54) **Support isolant pour barres d'alimentation ou de distribution électrique**
Isolierter Träger für elektrische Förder- oder Verteilungsschienen
Insulating support for electrical supply or distribution busbars

(30) Priorité: 22.09.1992 FR 9211247
(43) Date de publication de la demande: 30.03.1994
(73) Titulaire: LEGRAND, F-87045 Limoges Cédex (FR)
(72) Inventeur: Coly, Jean-Christophe, F-87000 Limoges (FR); Guelin, Jacques, F-87000 Limoges (FR)
(74) Mandataire: CABINET BONNET-THIRION

(56) Documents cités:
- CH-A- 389 058
- CH-A- 486 754
- CH-A- 652 535
- DE-A- 2 436 154
- GB-A- 833 041
- US-A- 3 538 390

## Description

La présente invention concerne d'une manière générale les barres métalliques mises en oeuvre dans certaines installations électriques pour l'alimentation en courant d'un ou plusieurs quelconques appareils ou pour la distribution de courant à partir d'un tel appareil.

Dans une installation triphasée par exemple, il peut ainsi être mis en oeuvre, parallèlement les unes aux autres, trois barres de phase et une barre de neutre, et, le plus souvent, il s'agit de barres omnibus concernant en parallèle plusieurs appareils.

La présente invention vise plus précisément les supports isolants nécessaires au positionnement et au maintien de ces barres.

Plus précisément encore, elle vise le cas où, étant susceptibles d'intervenir au passage sur ces barres, en un point quelconque de celles-ci, ces supports isolants comportent deux pièces, l'une inférieure, formant socle de fixation, l'autre supérieure, formant chape de recouvrement, entre lesquelles sont ménagés, en nombre requis, à distance l'un de l'autre, plusieurs logements propres chacun à la réception individuelle d'une telle barre, transversalement par rapport à celle-ci.

A ce jour, ces logements ne sont chacun individuellement aptes à recevoir une barre que suivant une position unique bien déterminée pour celle-ci.

Or, suivant les nécessités du moment, et, en particulier, pour faciliter d'éventuels repiquages latéraux sans interférence entre ceux-ci, il est souhaitable que ces barres puissent être disposées suivant des positions différentes.

Il est ainsi connu de les disposer à plat, c'est-à-dire horizontalement, de chant, c'est-à-dire verticalement, ou suivant une position inclinée intermédiaire entre les deux précédentes.

Il faut donc normalement disposer à ce jour de supports isolants de types différents adaptés à ces diverses positions.

Il en résulte, de manière dispendieuse, une multiplication des fabrications nécessaires, avec un accroissement corrélatif des frais de stockage et de gestion correspondants.

Dans le document CH-A-486 754 il est proposé un support isolant, qui, pour permettre à des barres d'occuper l'une ou l'autre de deux positions déterminées, l'une horizontale, l'autre verticale, comporte, outre deux pièces supérieure et inférieure, qui doivent être reliées entre elles par des tirants boulonnés et forment globalement ainsi un châssis pour l'ensemble, un empilage longitudinal, sur deux niveaux, de pièces isolantes.

Il en résulte une relative complexité de construction pour l'ensemble.

Dans le document DE-A-24 36 154 les barres sont chacune individuellement reçues dans des berceaux, qui sont chacun individuellement montés rotatifs dans une pièce commune à l'ensemble, et qu'il est donc nécessaire de bloquer en position sur cette dernière.

Outre, comme précédemment, une relative complexité de construction pour l'ensemble, il en résulte une certaine difficulté de réglage au montage.

La présente invention a d'une manière générale pour objet une disposition permettant d'éviter ces inconvénients.

De manière plus précise, elle a pour objet un support isolant pour barres d'alimentation ou de distribution électrique du genre comportant au moins deux pièces, l'une inférieure, formant socle de fixation, l'autre supérieure, formant chape de recouvrement, entre lesquelles sont ménagés, à distance l'un de l'autre, plusieurs logements, qui sont propres chacun à la réception individuelle d'une barre, transversalement par rapport à celle-ci, et dont l'un au moins est apte à la mise en place d'une barre suivant l'une quelconque de plusieurs positions différentes, ce support isolant étant d'une manière générale caractérisé en ce que l'un au moins des logements, et en pratique chacun de ceux-ci, est formé directement par la pièce inférieure et par la pièce supérieure, en étant formé au moins pour partie par une échancrure ou rainure de la surface supérieure de la pièce inférieure, et/ou au moins pour partie par une échancrure ou rainure de la surface inférieure de la pièce supérieure.

Le support isolant suivant l'invention offre ainsi avantageusement, avec une grande simplicité de construction, la possibilité d'implanter au gré des nécessités chacune des barres à mettre en oeuvre suivant l'une quelconque de plusieurs positions distinctes.

En pratique, trois positions au moins sont envisageables, à plat, de chant ou inclinée.

Les caractéristiques et avantages de l'invention ressortiront d'ailleurs de la description qui va suivre, à titre d'exemple, en référence aux dessins schématiques annexés sur lesquels :
la figure 1 est une vue partie en coupe longitudinale et partie en élévation, et éclatée, d'un support isolant suivant l'invention ;
la figure 2 est, suivant la flèche II de la figure 1, une vue en plan de la pièce supérieure, formant chape de recouvrement, de ce support isolant ;
la figure 3 est, suivant la flèche III de la figure 1, une vue en plan de sa pièce inférieure, formant socle de fixation ;
la figure 4 est une vue partie en coupe longitudinale et partie en élévation analogue à celle de la figure 1, après rapprochement relatif des deux pièces supérieure et inférieure concernées ;
les figures 5A, 5B, 5C sont, à échelle différente, des vues partielles en élévation-coupe, illustrant les diverses positions possibles pour une barre avec un support isolant suivant l'invention ;
la figure 6 est une vue partielle en élévation qui, reprenant pour partie celle des figures 5A, 5B, 5C, concerne une variante de réalisation ;
la figure 7 est une vue en perspective concernant une autre variante de réalisation ;
la figure 8 est une vue en élévation d'un dispositif de raccordement susceptible d'être associé au support isolant suivant l'invention pour le raccordement à un appareil d'une quelconque des barres concernées par celui-ci ;
la figure 9 est, suivant la flèche IX de la figure 8, une vue de bout de ce dispositif de raccordement, pour un premier mode de mise en oeuvre de celui-ci ;
les figures 10, 11, 12, 13 sont des vues de bout, qui, analogues à celle de la figure 9, se rapportent chacune respectivement à d'autres modes de mise en oeuvre de ce dispositif de raccordement ;
la figure 14 est une vue de bout d'une des pièces constitutives de ce dispositif de raccordement, pour une variante de réalisation de celle-ci.

Tel qu'illustré sur ces figures, il s'agit, globalement, d'assurer le positionnement et le maintien de barres 10 parallèlement les unes aux autres, pour l'alimentation électrique d'un quelconque appareil 11, ou pour une quelconque distribution électrique à partir d'un tel appareil 11.

En pratique, les barres 10, qui sont des barres métalliques réalisées par exemple en cuivre, ont une section transversale rectangulaire.

Soit L1 leur largeur et L2 leur épaisseur.

De telles barres 10 étant bien connues par elles-mêmes et ne relevant pas en propre de la présente invention, elles ne seront pas décrites plus en détail ici.

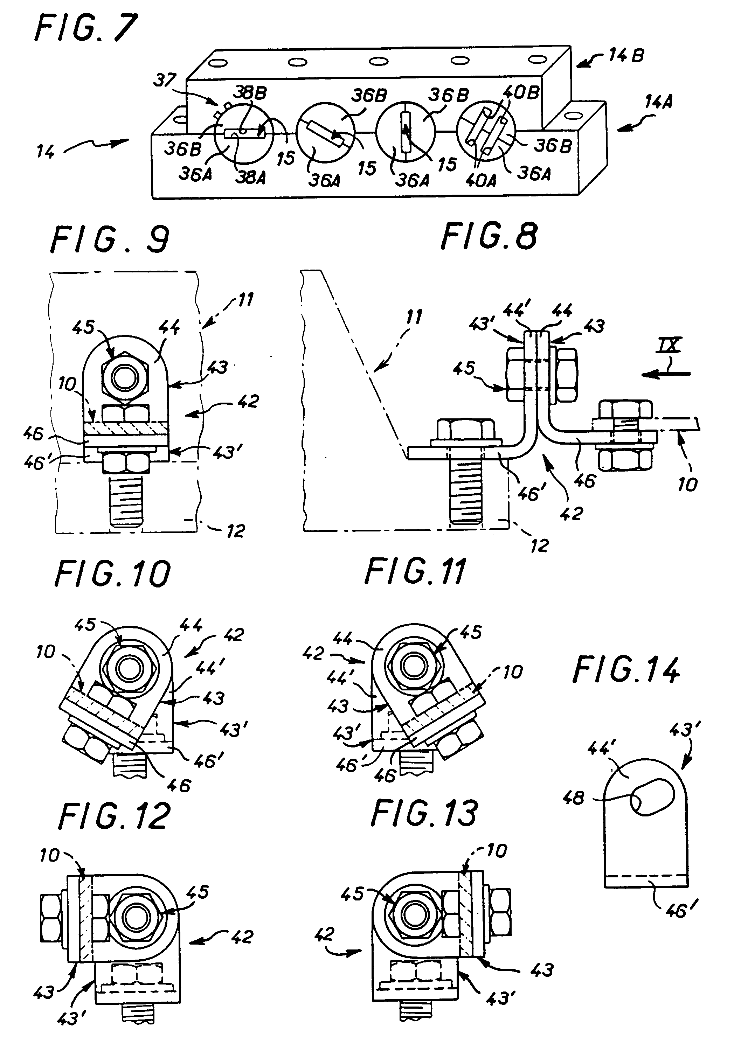

Il en sera de même pour l'appareil 11, dont seule une partie de la silhouette a été tracée en traits interrompus sur les figures 8 et 9.

Il suffira d'indiquer que, pour son raccordement électrique, un tel appareil 11 présente au moins une borne de connexion 12.

Pour le positionnement et le maintien des barres 10 parallèlement les unes aux autres, il est mis en oeuvre, le long de ces barres 10, et/ou en bout de celles-ci, des supports isolants 14.

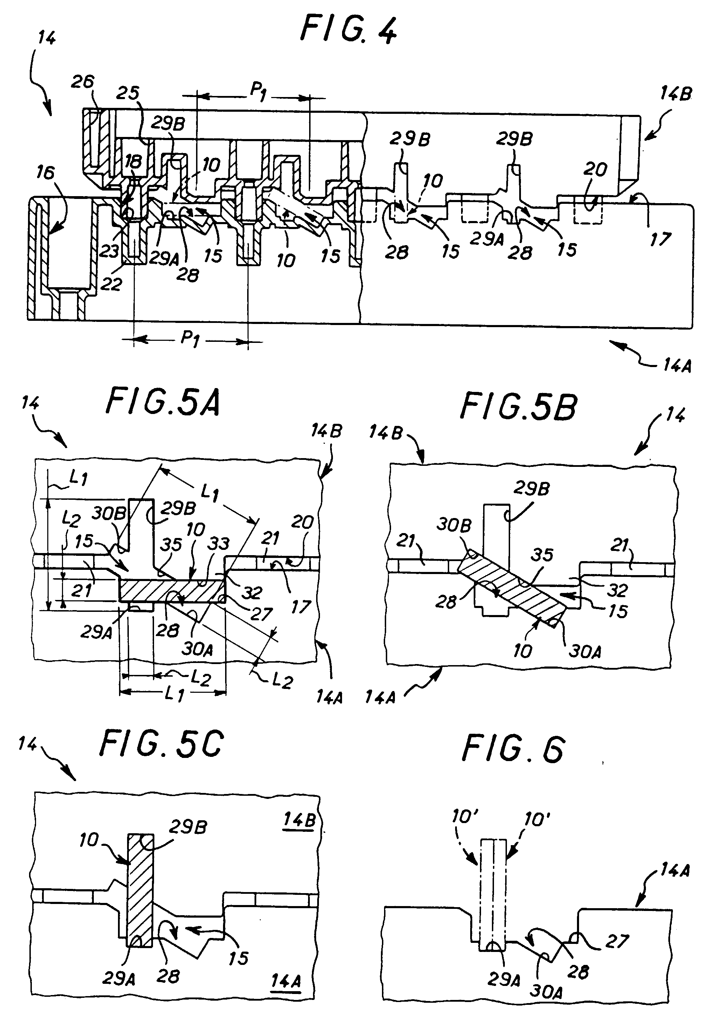

De manière connue en soi, chacun de ces supports isolants 14 comporte au moins deux pièces, à savoir une pièce inférieure 14A, formant socle de fixation, et une pièce supérieure 14B, formant chape de recouvrement, entre lesquelles sont ménagés, à distance l'un de l'autre, et suivant le nombre requis, plusieurs logements 15, figure 4, propres chacun à la réception individuelle d'une telle barre 10, transversalement par rapport à celle-ci.

En pratique, communes à l'ensemble des barres 10, la pièce inférieure 14A et la pièce supérieure 14B se présentent sous la forme de barrettes qui, de configuration générale parallélépipédique, s'étendent perpendiculairement aux barres 10, en présentant l'une et l'autre une même largeur L3 et en étant superposées l'une à l'autre.

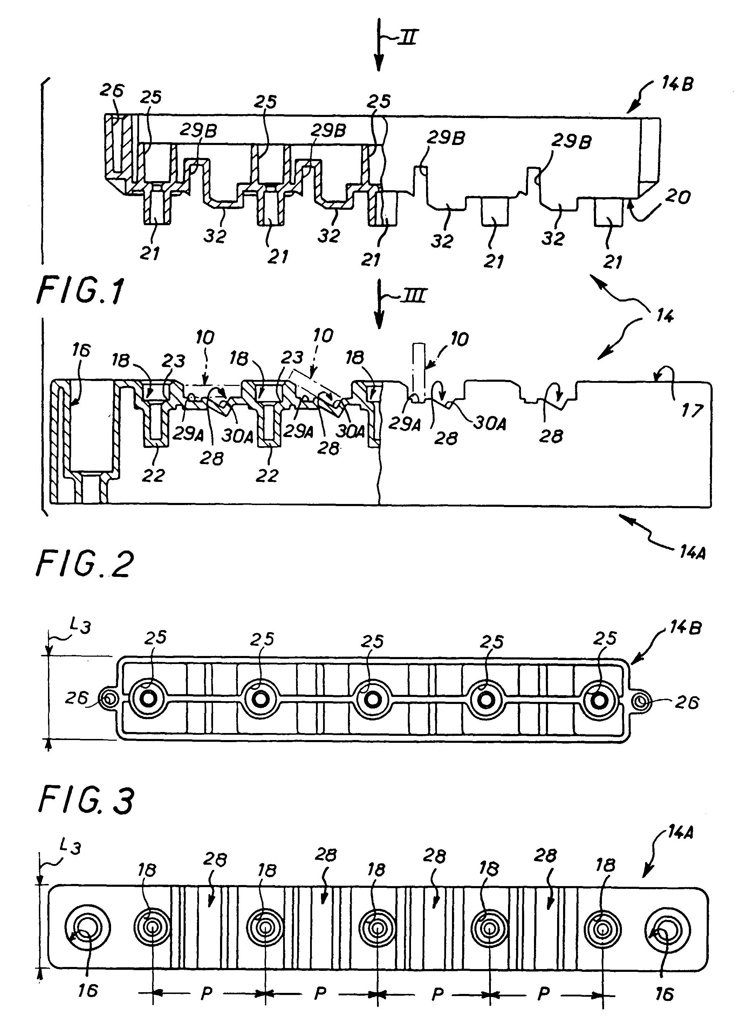

Dans la forme de réalisation plus particulièrement représentée sur les figures 1 à 6, la pièce inférieure 14A présente un puits 16 à chacune de ses extrémités, pour le passage d'un quelconque moyen de fixation, tel que vis ou autre, propre à son assujettissement à un quelconque support.

Elle présente, en outre, de place en place, en creux sur sa surface supérieure 17, suivant en pratique un pas régulier P1, des logements 18, pour l'emboîtement sur elle, et la fixation, de la pièce supérieure 14B, cette pièce supérieure 14B présentant, en correspondance, en saillie sur sa surface inférieure 20, suivant le pas P1, des colonnettes 21 de section transversale complémentaire de celle de ces logements 18.

Pour l'intervention de quelconques moyens de fixation, tels que vis ou autres, non représentés, les logements 18 de la pièce inférieure 14A se prolongent chacun par un puits 22 au-delà d'un épaulement 23 assurant l'appui des colonnettes 21 de la pièce supérieure 14B, et ces colonnettes 21, qui viennent elles-mêmes dans le prolongement de puits 25, sont creuses.

Pour la mise en place, éventuelle, d'un capot non représenté, la pièce supérieure 14B présente, en outre, à chacune de ses extrémités, dans la forme de réalisation plus particulièrement représentée sur les figures 1 à 6, un puits 26 propre à l'intervention d'un quelconque moyen de fixation, tel que vis ou autre.

Dans les formes de réalisation représentées, quatre logements 15 sont prévus, dont trois pour des barres 10 de phase et un pour une barre 10 de neutre.

En pratique, ces logements 15 sont établis à intervalles réguliers, au même pas P1 que les logements 18 et que les colonnettes 21 des pièces inférieure 14A et supérieure 14B.

Chacun d'eux est encadré par deux des zones de fixation que constituent ces logements 18 et ces colonnettes 21.

L'un au moins des logements 15, et en pratique chacun de ceux-ci, est apte à la mise en place d'une barre 10 suivant l'une quelconque de plusieurs positions différentes.

En pratique, ces diverses positions correspondent chacune respectivement à diverses orientations angulaires d'une barre 10 dans un plan perpendiculaire à celle-ci.

Ce plan est le plan de figure sur les figures 4, 5A, 5B, 5C.

Suivant l'invention, l'un au moins des divers logements 15, et en pratique chacun de ceux-ci, est formé directement par la pièce inférieure 14A et par la pièce supérieure 14B, en étant formé au moins pour partie, suivant des dispositions décrites plus en détail ultérieurement, par une échancrure ou rainure de la surface supérieure 17 de la pièce inférieure 14A et/ou au moins pour partie par une échancrure ou rainure de la surface inférieure 20 de la pièce supérieure 14B.

En pratique, dans la forme de réalisation représentée, les divers logements 15 sont tous identiques entre eux, et chacun d'eux est apte à recevoir une barre 10 suivant l'une quelconque des positions suivantes :
à plat, c'est-à-dire parallèlement à l'interface entre la pièce inférieure 14A et la pièce supérieure 14B, et, en pratique, horizontalement, suivant un angle nul, figure 5A ;
de chant, c'est-à-dire perpendiculairement à l'interface entre la pièce inférieure 14A et la pièce supérieure 14B, et en pratique verticalement, suivant un angle de 90°, figure 5C ;
ou inclinée, suivant une orientation intermédiaire entre les deux précédentes, et par exemple suivant un angle de 30° par rapport à l'interface entre la pièce inférieure 14A et la pièce supérieure 14B, figure 5B.

Pour chacun des logements 15, la pièce inférieure 14A présente, transversalement en creux sur sa surface supérieure 17, dans cette forme de réalisation, une échancrure 28 qui, de section transversale globalement rectangulaire, permet, si désiré, de recevoir à plat une barre 10.

Cette échancrure 28 a donc une largeur qui, sensiblement égale à la largeur L1 des barres 10, est, en pratique, légèrement supérieure à celle-ci.

Le fond 27 de cette échancrure 28 présente lui-même, transversalement, en creux, à distance l'une de l'autre, au moins deux rainures 29A, 30A, l'une de section transversale rectangulaire, pour réception de chant d'une barre 10, l'autre de section transversale triangulaire, pour réception inclinée d'une telle barre 10.

La rainure 29A a donc une largeur qui, sensiblement égale à l'épaisseur L2 des barres 10, est en pratique légèrement supérieure à celle-ci.

La rainure 30A est formée de deux flancs, qui, l'un et l'autre inclinés, l'un à 60° l'autre à 30°, forment conjointement un dièdre de 90°.

Au droit de la rainure 29A de section transversale rectangulaire de la pièce inférieure 14A, la pièce supérieure 14B présente elle-même, transversalement, en creux, sur sa surface inférieure 20, dans la forme de réalisation représentée, une rainure 29B de section transversale rectangulaire ayant même largeur L2 que la rainure 29A.

Les dispositions sont telles que, lorsque la pièce supérieure 14B est emboîtée sur la pièce inférieure 14A, avec la tranche de ses colonnettes 21 en butée contre les épaulements 23 de cette pièce inférieure 14A, figure 4, la distance entre le fond de la rainure 29A de la pièce inférieure 14A et celui de la rainure 29B de la pièce supérieure 14B est sensiblement égale à la largeur L2 des barres 10 tout en étant en pratique légèrement supérieure à celle-ci, figure 5A.

Au droit de la rainure 30A de section transversale triangulaire de la pièce inférieure 14A, la pièce supérieure 14B présente, en saillie, sur sa surface inférieure 20, dans la forme de réalisation représentée, un bossage 32, dont une partie 33 au moins de la surface inférieure s'étend parallèlement au fond 27 de l'échancrure 28 de la pièce inférieure 14A.

Les dispositions sont telles que, lorsque, comme indiqué précédemment, la pièce supérieure 14B est emboîtée sur la pièce inférieure 14A, le bossage 32 de la pièce supérieure 14B est partiellement engagé dans l'échancrure 28 de la pièce inférieure 14A et la partie 33 de sa surface inférieure est à une distance du fond 27 de cette échancrure 28 sensiblement égale à l'épaisseur L2 des barres 10 tout en étant en pratique légèrement supérieure à celle-ci.

Conjointement, une partie 35 au moins de la surface inférieure du bossage 32 de la pièce supérieure 14B, et il s'agit en pratique de la partie subsistante de cette surface inférieure par rapport à la partie 33 précédente, s'étend en oblique, suivant l'inclinaison du flanc correspondant de la rainure 30A de section transversale triangulaire de la pièce inférieure 14A, et il s'agit en pratique de celui des flancs de cette rainure 30A qui est le plus proche de la rainure 29A de section transversale rectangulaire associée.

En pratique, cette partie 35 de la surface inférieure du bossage 32 de la pièce supérieure 14B appartient elle-même à une rainure 30B de section transversale triangulaire qui, affectant transversalement en creux la surface inférieure 20 de cette pièce supérieure 14B, en correspondance avec la rainure 30A de section transversale triangulaire de la pièce inférieure 14A, dans le prolongement de celle-ci, recoupe, à son débouché, la rainure 29B de section transversale rectangulaire de la pièce supérieure 14B.

Les dispositions sont telles que, conjointement, lorsque, comme indiqué précédemment, la pièce supérieure 14B est emboîtée sur la pièce inférieure 14A, d'une part, la partie 35 de la surface inférieure du bossage 32 de la pièce supérieure 14B est à une distance du flanc correspondant de la rainure 30A de section transversale triangulaire de la pièce inférieure 14A sensiblement égale à l'épaisseur L2 des barres 10 tout en étant en pratique légèrement supérieure à celle-ci, et, d'autre part, les flancs opposés des rainures 30A, 30B de section transversale triangulaire de la pièce inférieure 14A et de la pièce supérieure 14B sont à une distance l'un de l'autre sensiblement égale à la largeur L1 de ces barres 10 tout en étant en pratique légèrement supérieure à cette dernière.

Il résulte de ce qui précède que, comme recherché, pour chacun des logements 15, une barre 10 peut, au choix, suivant les nécessités du moment, être disposée soit à plat, figure 5A, soit en position inclinée, figure 5B, soit de chant, figure 5C.

Dans la variante de réalisation représentée à la figure 6, il y a, côte à côte, en creux, sur le fond 27 de l'une au moins des échancrures 28 de la pièce inférieure 14A, et en pratique sur le fond 27 de chacune de celles-ci, deux rainures 29A de section transversale rectangulaire, pour le cas où une barre 10 se trouve dédoublée en deux barres 10' jumelles, qui, en pratique, sont alors d'épaisseur inférieure aux précédentes.

Corollairement, la pièce supérieure 14B présente en correspondance, dans ce cas, deux rainures de section transversale rectangulaire de largeur appropriée.

Dans la forme de réalisation représentée sur la figure 7, l'un au moins des logements 15, et en pratique chacun de ceux-ci, est formé entre deux coquilles hémi-cylindriques 36A, 36B qui sont aptes à enserrer entre elles une barre 10 suivant une position unique bien déterminée pour celle-ci, et qui, à la manière d'un barillet, sont conjointement montées globalement réglables angulairement en position entre la pièce inférieure 14A et la pièce supérieure 14B, par rotation autour de l'axe suivant lequel s'étend transversalement un tel logement 15.

Préférentiellement, et tel que schématisé en 37, des moyens d'indexation sont prévus entre les deux coquilles 36A, 36B et la pièce inférieure 14A et/ou la pièce supérieure 14B.

Les barres 10 peuvent être ainsi chacune individuellement disposées à plat, en position inclinée ou de chant, comme précédemment, mais elles peuvent également être disposées suivant diverses autres positions intermédiaires entre les précédentes.

Dans la forme de réalisation représentée, les deux coquilles 36A, 36B présentent, chacune, en regard l'une de l'autre, une échancrure 38A, 38B pour la définition d'un logement 15 lorsque seule une barre 10 est concernée, et deux rainures 40A, 40B de section transversale rectangulaire lorsque deux barres jumelles 10 ou 10' sont à mettre en oeuvre.

Quelle que soit la forme de réalisation du support isolant 14 suivant l'invention il peut avantageusement être associé à celui-ci un dispositif de raccordement 42 comportant, tel que représenté sur les figures 8 et 9, deux équerres 43, 43', qui, adossées l'une à l'autre par l'une de leurs ailes 44, 44', sont globalement réglables angulairement en position l'une par rapport à l'autre, par rotation autour d'un ensemble vis-écrou 45 assurant leur assemblage, et qui, par l'autre de leurs ailes 46, 46', sont aptes chacune à être fixées, l'une sur une barre 10, l'autre sur l'appareil 11 à raccorder à celle-ci.

Tel que l'illustrent les figures 8 à 13, il est possible, grâce à un tel dispositif de raccordement 42, par rotation l'une par rapport à l'autre de ses deux équerres 43, 43', de se satisfaire très simplement des diverses positions possibles de la barre 10 par rapport à l'appareil 11.

Pour accroître encore à cet égard les possibilités d'implantation, le perçage 48 que présente l'aile 44, 44' des équerres 43, 43' pour le passage de l'ensemble vis-écrou 45 peut, pour l'une au moins des équerres 43, 43', et il s'agit de l'équerre 43' sur la figure 14, être plus ou moins allongé latéralement en boutonnière.

Bien entendu, la présente invention ne se limite pas aux formes de réalisation décrites et représentées, mais englobe toute variante d'exécution dans le cadre des revendications.

## Revendications

1. Support isolant pour barres omnibus, du genre comportant au moins deux pièces (14A, 14B), l'une inférieure, formant socle de fixation, l'autre supérieure, formant chape de recouvrement, entre lesquelles sont ménagés, à distance l'un de l'autre, plusieurs logements (15), qui sont propres chacun à la réception individuelle d'une barre (10) transversalement par rapport à celle-ci, et dont l'un au moins est apte à la mise en place d'une barre (10) suivant l'une quelconque de plusieurs positions différentes, caractérisé en ce que l'un au moins des divers logements (15) est formé directement par la pièce inférieure (14A) et par la pièce supérieure (14B), en étant formé au moins pour partie par une échancrure ou rainure de la surface supérieure (17) de la pièce inférieure (14A) et/ou au moins pour partie par une échancrure ou rainure de la surface inférieure (20) de la pièce supérieure (14B).

2. Support isolant suivant la revendication 1, caractérisé en ce que les diverses positions que permet à une barre (10) l'un au moins des divers logements (15) correspondent chacune respectivement à diverses orientations angulaires de cette barre (10) dans un plan qui est perpendiculaire à celle-ci.

3. Support isolant suivant la revendication 2, caractérisé en ce que ledit logement (15) est apte à recevoir une barre (10) suivant l'une quelconque des positions suivantes : à plat, de chant ou inclinée.

4. Support isolant suivant les revendications 2 et 3, prises conjointement, caractérisé en ce que, pour ledit logement (15), la pièce inférieure (14A) présente, transversalement en creux sur sa surface supérieure (17), une échancrure (28) qui, de section transversale globalement rectangulaire, permet de recevoir à plat une barre (10), et le fond (27) de cette échancrure (28) présente transversalement en creux, à distance l'une de l'autre, au moins deux rainures (29A, 30A), l'une de section transversale rectangulaire, pour réception de chant d'une telle barre (10), l'autre de section transversale triangulaire, pour réception inclinée de celle-ci.

5. Support isolant suivant la revendication 4, caractérisé en ce que, au droit de la rainure (29A) de section transversale rectangulaire de la pièce inférieure (14A), la pièce supérieure (14B) présente elle-même transversalement en creux sur sa surface inférieure (20) une rainure (29B) de section transversale rectangulaire ayant même largeur que la précédente.

6. Support isolant suivant l'une quelconque des revendications 4, 5, caractérisé en ce que, au droit de la rainure (30A) de section transversale triangulaire de la pièce inférieure (14A), la pièce supérieure (14B) présente en saillie sur sa surface inférieure (20) un bossage (32) dont une partie (33) au moins de la surface inférieure s'étend parallèlement au fond (27) de l'échancrure (28) de la pièce inférieure (14A).

7. Support isolant suivant la revendication 6, caractérisé en ce qu'une partie (35) au moins de la surface inférieure du bossage (32) de la pièce supérieure (14B) s'étend en oblique, suivant l'inclinaison du flanc correspondant de la rainure (30A) de section transversale triangulaire de la pièce inférieure (14A), et elle appartient elle-même à une rainure (30B) de section transversale triangulaire qui, affectant transversalement en creux la surface inférieure (20) de la pièce supérieure (14B), recoupe la rainure (29B) de section transversale rectangulaire de celle-ci.

8. Support isolant suivant l'une quelconque des revendications 1 à 7, caractérisé en ce que les divers logements (15) sont tous identiques entre eux.

9. Support isolant suivant l'une quelconque des revendications 1 à 8, caractérisé en ce qu'il lui est associé un dispositif de raccordement (42) comportant deux équerres (43, 43'), qui, adossées l'une à l'autre par l'une de leurs ailes (44, 44'), sont globalement réglables angulairement en position l'une par rapport à l'autre par rotation autour d'un ensemble vis-écrou (45) assurant leur assemblage, et qui, par l'autre de leurs ailes (46, 46'), sont aptes chacune à être fixées, l'une sur une barre (10), l'autre sur un appareil (11) à raccorder à celle-ci.

## Patentansprüche

1. Isolierträger für Sammelschienen mit wenigstens zwei Teilen (14A, 14B), von denen ein unteres einen Befestigungssockel und das andere, obere eine Abdeckkappe bildet und zwischen denen mehrere, einen Abstand voneinander aufweisende Aufnahmen (15) gebildet sind, die jeweils zur individuellen Aufnahme einer Schiene (10) quer zu dieser geeignet sind und von denen wenigstens eine das Einsetzen einer Schiene (10) in einer beliebigen von mehreren unterschiedlichen Positionen ermöglicht,
dadurch **gekennzeichnet**,
daß wenigstens eine der verschiedenen Aufnahmen (15) unmittelbar durch das untere Teil (14A) und durch das obere Teil (14B) gebildet ist, indem sie zumindest teilweise durch eine Aussparung oder Nut der oberen Fläche (17) des unteren Teils (14A) und/oder wenigstens teilweise durch eine Aussparung oder Nut der unteren Fläche (20) des oberen Teils (14B) gebildet ist.

2. Isolierträger nach Anspruch 1,
dadurch **gekennzeichnet,**
daß die verschiedenen Positionen einer Schiene (10), die wenigstens eine der verschiedenen Aufnahmen (15) ermöglicht, jeweils verschiedenen Winkelorientierungen dieser Schiene (10) in einer Ebene entsprechen, die senkrecht zu dieser ist.

3. Isolierträger nach Anspruch 2,
dadurch **gekennzeichnet,**
daß die Aufnahme (15) zur Aufnahme einer Schiene (10) in einer beliebigen der folgenden Positionen geeignet ist: flach, hochkant oder geneigt.

4. Isolierträger nach den Ansprüchen 2 und 3 zusammengenommen,
dadurch **gekennzeichnet**,
daß für die Aufnahme (15) das untere Teil (14A) an seiner oberen Fläche (17) eine quer verlaufende, tiefliegende Aussparung (28) aufweist, die einen allgemein rechteckigen Querschnitt besitzt und eine flache Aufnahme einer Schiene (10) gestattet, und der Boden (27) dieser Aussparung (28) wenigstens zwei quer verlaufende, vertiefte sowie im Abstand voneinander angeordnete Nuten (29A, 30A) aufweist, von denen eine für eine hochkantige Aufnahme einer solchen Schiene (10) einen rechteckigen Querschnitt besitzt, während die andere für die geneigte Aufnahme dieser Schiene einen dreieckigen Querschnitt besitzt.

5. Isolierträger nach Anspruch 4,
dadurch **gekennzeichnet**,
daß das obere Teil (14B) gegenüber der einen rechteckigen Querschnitt aufweisenden Nut (29A) des unteren Teils (14A) selbst eine quer verlaufende vertiefte Nut (29B) rechteckigen Querschnitts an seiner unteren Fläche (20) besitzt, die die gleiche Breite wie die vorhergehende Nut aufweist.

6. Isolierträger nach einem der Ansprüche 4, 5,
dadurch **gekennzeichnet,**
daß das obere Teil (14B) gegenüber der einen dreieckigen Querschnitt aufweisenden Nut (30A) des unteren Teils (14A) einen von seiner unteren Fläche (20) vorspringenden Ansatz (32) besitzt, wobei wenigstens ein Teil (33) von dessen unterer Fläche sich parallel zu dem Boden (27) der Aussparung (28) des unteren Teils (14A) erstreckt.

7. Isolierträger nach Anspruch 6,
dadurch **gekennzeichnet,**
daß wenigstens ein Teil (35) der unteren Fläche des Ansatzes (32) des oberen Teils (14B) gemäß der Neigung der entsprechenden Flanke der einen dreieckigen Querschnitt aufweisenden Nut (30A) des unteren Teils (14A) schräg verläuft und selbst zu einer Nut (30B) dreieckigen Querschnitts gehört, die in Querrichtung verläuft und vertieft an der unteren Fläche (20) des oberen Teils (14B) vorgesehen ist sowie deren einen rechteckigen Querschnitt aufweisende Nut (29B) schneidet.

8. Isolierträger nach einem der Ansprüche 1 bis 7,
dadurch **gekennzeichnet**,
das die verschiedenen Aufnahmen (15) untereinander gleich sind.

9. Isolierträger nach einem der Ansprüche 1 bis 8,
dadurch **gekennzeichnet,**
daß ihm eine Anschlußeinrichtung (42) mit zwei Winkel-Stücken (43, 43') zugeordnet ist, die mit jeweils einem ihrer Schenkel (44, 44') aneinander anliegen und in ihrer Winkelposition durch Drehen um eine deren Verbindung sicherstellende Schrauben/Mutter-Einheit (45) allgemein verstellbar sind und die mit ihrem anderen Schenkel (46, 46') an einer Schiene (10) bzw. an einer an diese anzuschließenden Einrichtung (11) fixierbar sind.

## Claims

1. An insulating support for bus bars, of the type comprising at least two portions (14A, 14B), a lower portion forming a fixing base and the upper portion forming a cover cap, in which there are provided at spacings from each other a plurality of housings (15) which are each suitable for individually receiving a bar (10) transversely with respect thereto, and of which one at least is suitable for setting a bar (10) in place in any one of a plurality of different positions characterised in that one at least of the various housings (15) is formed directly by the lower portion (14A) and by the upper portion (14B), being formed at least in part by a groove or recess in the upper surface (17) of the lower portion (14A) and/or at least in part by a groove or recess in the lower surface (20) of the upper portion (14B).

2. An insulating support according to claim 1 characterised in that the various positions permitted for a bar (10) by one at least of the various housings (15) each respectively correspond to different angular orientations of said bar (10) in a plane which is perpendicular thereto.

3. An insulating support according to claim 2 characterised in that said housing (15) is capable of receiving a bar (10) in any one of the following positions: flat, on edge or inclined.

4. An insulating support according to claims 2 and 3 in combination characterised in that, for said housing (15), the lower portion (14A) is provided transversely in recessed relationship on its upper surface (17) with a recess (28) which of generally rectangular cross-section permits a bar (10) to be received in a flat position and the bottom (27) of said recess (28) is provided transversely in recessed relationship at a spacing from each other with at least two grooves (29A, 30A), one of rectangular cross-section for receiving such a bar (10) on edge and the other of triangular cross-section for inclinedly receiving the bar.

5. An insulating support according to claim 4 characterised in that in line with the groove (29A) of rectangular cross-section of the lower portion (14A), the upper portion (14B) is itself provided transversely in recessed relationship on its lower surface (20) with a groove (29B) of rectangular cross-section of the same width as the preceding one.

6. An insulating support according to any one of claims 4 and 5 characterised in that in line with the groove (30A) of triangular cross-section of the lower portion (14A) the upper portion (14B) is provided in projecting relationship on its lower surface (20) with a boss (32) of which a part (33) at least of the lower surface extends parallel to the bottom (27) of the recess (28) of the lower portion (14A).

7. An insulating support according to claim 6 characterised in that a part (35) at least of the lower surface of the boss (32) of the upper portion (14B) extends obliquely in accordance with the inclination of the corresponding side of the groove (30A) of triangular cross-section of the lower portion (14A) and it belongs itself to a groove (30B) of triangular cross-section which, involving transversely in recessed relationship the lower surface (20) of the upper portion (14B), intersects the groove (29B) of rectangular cross-section thereof.

8. An insulating support according to any one of claims 1 to 7 characterised in that the various housings (15) are all identical to each other.

9. An insulating support according to any one of claims 1 to 8 characterised in that associated therewith is a connecting device (42) comprising two right-angled members (43, 43') which, placed back to back with each other by way of one of their limbs (44, 44'), are generally adjustable angularly in position relative to each other by rotation about a screw-nut assembly (45) which provides for assembling thereof and which, by the other of their limbs (46, 46') are each capable of being fixed one to a bar (10) and the other to an item of equipment (11) to be connected thereto.
